# EUROPÄISCHE PATENTSCHRIFT

(11) **EP 2 059 695 B1**
(45) Veröffentlichungstag und Bekanntmachung des Hinweises auf die Patenterteilung: **23.02.2011**
(21) Anmeldenummer: 07802828.9
(22) Anmeldetag: 23.08.2007
(51) Int. Cl.: F16H 61/28, F16H 61/24

(54) **SCHALTVORRICHTUNG FÜR KRAFTFAHRZEUG-WECHSELGETRIEBE**
SHIFTING DEVICE FOR A MOTOR VEHICLE VARIABLE-SPEED TRANSMISSION
DISPOSITIF DE CHANGEMENT DE VITESSE POUR UNE BOÎTE DE VITESSES DE VÉHICULE AUTOMOBILE

(30) Priorität: 08.09.2006 DE 102006042211
(43) Veröffentlichungstag der Anmeldung: 20.05.2009
(73) Patentinhaber: ZF Friedrichshafen AG, 88038 Friedrichshafen (DE)
(72) Erfinder: SPÄTH, Klaus, 88276 Berg (DE); FISCHER, Dieter, 88149 Nonnenhorn (DE)
(86) Internationale Anmeldenummer: PCT/EP2007/058769
(87) Internationale Veröffentlichungsnummer: WO 2008/028822

(56) Entgegenhaltungen:
- EP-A- 1 630 460
- WO-A-2007/093494
- WO-A-2007/101754
- DE-A1- 19 539 471
- DE-A1- 19 839 850
- DE-A1- 19 840 052

## Beschreibung

Die Erfindung betrifft eine Schaltvorrichtung mit einer Servounterstützungseinrichtung nach der im Oberbegriff von Anspruch 1 bzw. Anspruch 3 bzw. Anspruch 5 näher definierten 1 Art.

Bei derartigen Schaltvorrichtungen dient die Drehbewegung der Schaltstange zur Vorwahl der einzelnen Schaltgassen und erfordert im Allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servoschaltvorrichtungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muss durch Modifikation des Ventils an die Gestängeübersetzung angepasst werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, dass sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage: Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

Aus der DE 195 39 471 A1 ist eine Schaltvorrichtung bekannt, bei der das Steuerventil und der Kraftteil in einem Bauteil kombiniert wird. Die Schaltkraft wird je nach Schaltkraft des Fahrers proportional verstärkt und erzielt die gleichen Wirkungen wie bei einem handgeschalteten Getriebe. Der Fahrer verliert nicht das Gespür für die Schaltung, sein Empfinden, ob ein Gang eingelegt ist oder wie lang die Synchronisationsphase andauert, kann er unmittelbar spüren. Bei dieser Schaltvorrichtung bleibt die Ansteuerbarkeit der pneumatischen Unterstützungseinrichtung verbesserungsbedürftig.

In den nicht veröffentlichten Anmeldungen der Anmelderin mit den Aktenzeichen 10 2006 006 651.0 und 10 2006 006 652.9 wird eine Schaltvorrichtung mit Servounterstützungseinrichtung für ein Getriebe eines Fahrzeuges offenbart, die Mittel zum Wählen und zum Schalten einer Gangstufe des Getriebes und eine Steuerstange der Servounterstützungseinrichtung umfasst, auf welche die zu unterstützende Handschaltkraft einwirkt. In der nicht veröffentlichten Anmeldung mit dem Aktenzeichen 10 2006 006 651.0 sind in der Schaltvorrichtung elastische Elemente vorgesehen, um die auf die Servounterstützungseinrichtung einwirkende Handschaltkraft vor der Einleitung in die Servounterstützungseinrichtung zu verändern oder zu begrenzen. In der nicht veröffentlichten Anmeldung mit dem Aktenzeichen 10 2006 006 652.9 sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern und damit die Servounterstützungseinrichtung in ihrer Wirkung zu beeinflussen.

Um für jeden Gang eine andere Servounterstützungskraft realisieren zu können, benötigt man jedoch für jeden Gang eine andere Nachgiebigkeit oder Elastizität. Dies kann je nach konstruktiver Ausführung aufwendig sein und Bauraum benötigen, welcher oftmals nicht zur Verfügung steht.

Die DE 198 40 052 offenbart eine Schaltvorrichtung mit Servounterstützungseinrichtung für ein Getriebe eines Fahrzeugs mit einer Übertragung der von der Unterstützungseinrichtung gelieferten Schaltkraft auf eine Hohlwelle, die die zentrale Schaltwelle umgibt und die mit der Schaltwelle verdrehbar ist. Aus der EP-A-1 630 460, welche alle Merkmale des Oberbegriffs des Anspruchs 3 bzw. des Anspruchs 5 offenbart, ist eine Schaltvorrichtung mit Servounterstützungseinrichtung für ein Getriebe eines Fahrzeugs bekannt geworden, bei der Stifte zur Übertragung der Handschaltkraft in Nuten in der Schaltwelle eingreifen.

Schließlich ist aus der DE 198 39 850 A1, welche alle Merkmale des Oberbegriffs des Anspruchs 1 bzw. des Anspruchs 5 offenbart, eine Schaltvorrichtung mit Servounterstützungseinrichtung für ein Getriebe eines Fahrzeugs bekannt geworden, welche Mittel zum Wählen und zum Schalten einer Gangstufe des Getriebes aufweist. Ferner ist mindestens eine Nachgiebigkeit vor und/oder in der Servounterstützungseinrichtung, eine Hohlwelle und ein Element vorgesehen, auf das eine zu unterstützende Handkraft einwirkt. In der Ansteuerung der Servounterstützungseinrichtung ist eine Wegbegrenzung vorgesehen.

Der vorliegenden Erfindung liegt die Aufgabe zugrunde, eine Schaltvor richtung aufzuzeigen, bei welcher ohne zusätzlichen Bauraum und ohne verschiedene Nachgiebigkeiten jedem Gang eine entsprechende Servounterstützungskraft zugeordnet werden kann.

Die der Erfindung zugrunde liegende Aufgabe wird durch eine Schaltvorrichtung gemäß der Merkmale der Ansprüche 1, 3, oder 5 gelöst.

Weiterbildungen der Erfindung sind in den Unteransprüchen beschrieben.

Eine Schaltvorrichtung mit einer Servounterstützungseinrichtung für ein Getriebe eines Fahrzeuges umfasst Mittel zum Wählen und zum Schalten einer Gangstufe des Getriebes und eine Steuerstange der Servounterstützungseinrichtung, auf die eine zu unterstützende Handschaltkraft einwirkt. In der Ansteuerung der Servounterstützungseinrichtung ist eine Wegbegrenzung vorgesehen, um die Servounterstützungseinrichtung in ihrer Wirkung zu beeinflussen. Durch die Wegbegrenzung wird eine Begrenzung der Relativbewegung zwischen der Steuerstange und einer Kolbenstange der Servounterstützungseinrichtung realisiert. Die Wegbegrenzung ist derart ausgebildet, dass eine Servokennlinie und somit eine Servounterstützungskraft bedingt genutzt werden kann, wodurch sich für jede Gasse bzw. jeden Gang eine entsprechende Servounterstützungskraft erreichen lässt. Hierbei wird eine Servokennlinie verwendet, welche durch eine Nachgiebigkeit in den Bauteilen vor bzw. in der Servounterstützungseinrichtung oder aus deren Kombination gebildet wird. Beispielsweise kann die Nachgiebigkeit durch ein Federelement realisiert werden, welches an der Steuerstange der Servounterstützungseinrichtung angeordnet ist.

In einer ersten Ausführungsform der Erfindung wird eine Nut in einer Hohlwelle derart ausgeführt, dass zwischen der Nut und einem die Nut durchdringenden Stift in axialer Richtung der Hohlwelle unterschiedliche Verdrehspiele vorherrschen. Der die Nut durchdringende Stift ist in einem Hebel gelagert, über welchen die Steuerstange der Servounterstützungseinrichtung betätigt wird. Bei dieser Ausführungsform sind die Hohlwelle und der Hebel derart angeordnet, dass sie axial zueinander verschiebbar sind. Bei einer Drehung der Schaltwelle wird der Verdrehwinkel der Schaltwelle relativ zur Hohlwelle durch die Nut in der Hohlwelle begrenzt, wodurch der Hebel nur einen begrenzten Weg ausführen kann, bevor der Stift an der Nut in der Hohlwelle anliegt. Somit kann die durch den Hebel verschiebbare Steuerstange der Servounterstützungseinrichtung relativ zur Kolbenstange nur um einen entsprechend begrenzten Weg betätigt werden, wodurch eine entsprechend begrenzte Servounterstützungskraft erzeugt wird.

In einer weiteren Ausführungsform wird eine Nut in einer Schaltwelle derart ausgeführt, dass zwischen der Nut und einem in die Nut eingreifenden bzw. die Nut durchsetzender Stift in axialer Richtung der Schaltwelle unterschiedliche Verdrehspiele vorherrschen. Der Stift ist in einem Hebel angeordnet bzw. gelagert, über welchen die Steuerstange der Servounterstützungseinrichtung betätigt wird. Bei einer Drehung der Schaltwelle kommt diese um das jeweilige Verdrehspiel später mit dem Stift in Kontakt, wodurch die Ansteuerung der Servounterstützungseinrichtung erst nach der Überwindung des Verdrehspiels erfolgt. Dann wird der Hebel durch die Schaltwelle gedreht und somit die Steuerstange der Servounterstützungseinrichtung betätigt. Somit kann die durch den Hebel verschiebbare Steuerstange der Servounterstützungseinrichtung relativ zur Kolbenstange nur um einen entsprechend begrenzten Weg betätigt werden.

Die Nut in der Hohlwelle bzw. in der Schaltwelle ist derart ausgebildet, dass für jede Gasse bzw. jeden Gang ein unterschiedlich großes Verdrehspiel zwischen dem Stift und der Nut vorherrscht. Die Einschränkung der Betätigung der Steuerstange durch die Nut ist hierbei in einer der Betätigungsrichtungen stärker ausgebildet, als in die andere Betätigungsrichtung. In Verbindung mit der Servokennlinie führt dies zu unterschiedlichen Servounterstützungskräften.

In einer weiteren Ausführungsform wird eine Begrenzung der Relativbewegung zwischen der Steuerstange und der Kolbenstange der Servounterstützungseinrichtung über eine Bohrung in der Schaltwelle realisiert, beispielsweise eine Schwenkbohrung. Durch diese Bohrung entstehen zwischen der Schaltwelle und einem in der Bohrung angeordneten Stift entsprechende Spiele, wodurch zwischen der Schaltwelle und der Hohlwelle entsprechende Verdrehspiele entstehen und die Servounterstützungskraft entsprechend begrenzt werden kann. Die Spiele können derart ausgebildet sein, dass beidseitig das gleiche Verdrehspiel bzw. dass unterschiedliche Verdrehspiele zwischen der Schaltwelle und der Hohlwelle entstehen. Die Schwenkbohrung durch die Schaltwelle, in welcher sich der Stift befindet, kann auch als Langloch ausgebildet sein, wodurch in axialer Richtung der Schaltwelle unterschiedlich große Spiele realisierbar sind. Durch eine entsprechende Ausbildung des Langlochs kann für jede Gasse bzw. jeden Gang eine entsprechende Servounterstützungskraft erzeugt werden. Bei der Umsetzung der Wegbegrenzung durch das wird die Wählbewegung nicht durch die Schaltwelle, sondern über ein weiteres Element auf Mittel zum Wählen einer Gangstufe übertragen.

Die Wegbegrenzung der Steuerstange der Servounterstützungseinrichtung kann auch an einer anderen Stelle in der Schaltvorrichtung bzw. der Schaltanlage realisiert werden und dadurch konstruktiv anders ausführbar sein.

Durch die erfindungsgemäße Wegbegrenzung in der Ansteuerung der Servounterstützungseinrichtung kann die Betätigung der Steuerstange der Servounterstützungseinrichtung relativ zur Kolbenstange weg- bzw. gangabhängig begrenzt werden, wodurch sich eine entsprechende Servounterstützungskraft weg- bzw. gangabhängig realisieren lässt.

Im Folgenden wird das Grundprinzip der Erfindung, welche mehrere Ausführungsformen zulässt, an Hand einer Zeichnung beispielhaft näher erläutert.
Es zeigen:
- Fig. 1: eine Schaltanlage nach dem Stand der Technik,
- Fig. 2: eine Schnittdarstellung einer Ausführungsform der Schalt- vorrichtung,
- Fig. 3: eine Schnittdarstellung einer weiteren Ausführungsform der Schaltvorrichtung,
- Fig. 4: eine Schnittdarstellung einer weiteren Ausführungsform der Schaltvorrichtung,
- Fig. 5: Details einer Ausführungsform,
- Fig. 6: Details einer weiteren Ausführungsform und
- Fig. 7: eine Servokennlinie.

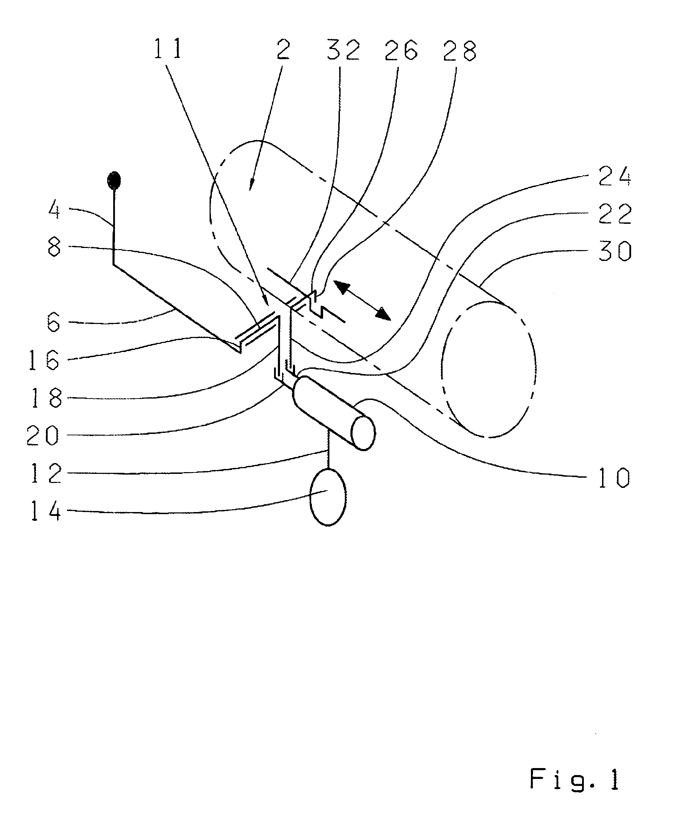

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein zwei axiale Endpositionen, die je einem geschalteten Übersetzungsverhältnis entsprechen und eine zwischen den Endpositionen liegende Mittelposition, die einer Neutralstellung des Getriebes entspricht.

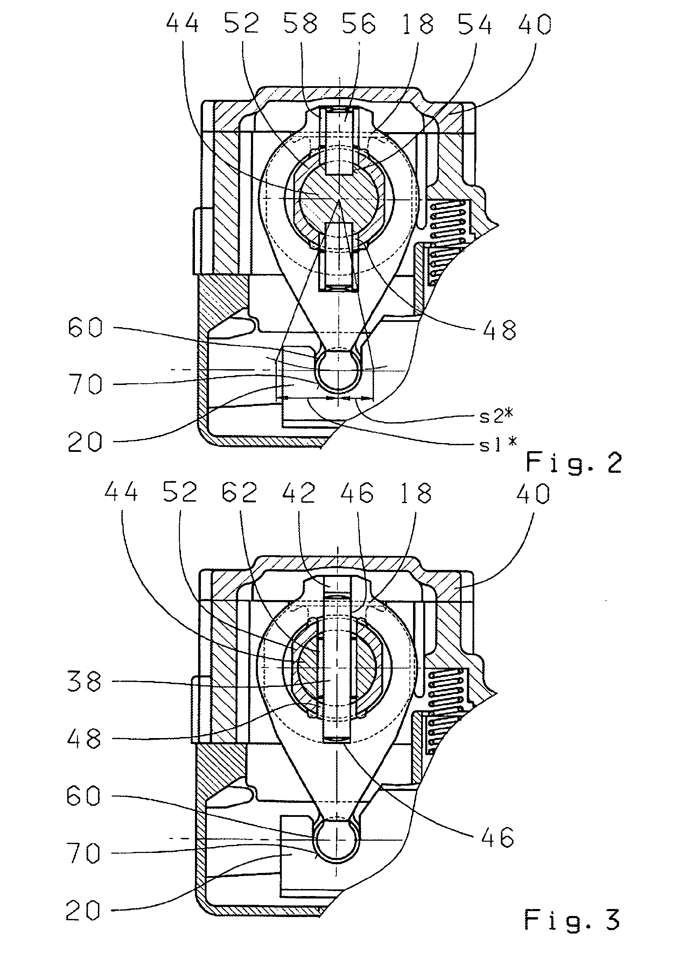

Die Fig. 2 zeigt die erfinderische Schaltvorrichtung 40 in einer Schnittdarstellung. Eine Schaltwelle 44 ist um ihre Achse drehbar innerhalb einer Hohlwelle 52 gelagert. Die Hohlwelle 52 ist innerhalb der Schaltvorrichtung 40 um die Achse der Schaltwelle 44 drehbar gelagert. Die Schaltwelle 44 weist an ihrem Umfang entlang ihrer Achse vorgesehene Nuten 54 auf. In diese Nuten 54 in der Schaltwelle 44 greifen Stifte 56 ein, die in Nadelbüchsen 58 im Hebel 18 drehbar gelagert sind. Die Stifte 56 sind derart in den Nuten 54 angeordnet, dass eine axiale Verschiebung der Schaltwelle 44 entlang ihrer Achse ermöglicht ist und eine Verdrehung der Schaltwelle 44 um ihre Achse ein Verschwenken des Hebels 18 auslöst.

Der Hebel 18 greift mit einer Rolle 60, die beispielsweise auf einem Bolzen leicht drehbar angeordnet ist, in eine Tasche 70 in der Steuerstange 20 ein und ermöglicht eine reibungsarme Übertragung der Handschaltkraft auf die pneumatische Servounterstützungseinrichtung 10. Eine von der Servounterstützungseinrichtung 10 erzeugte Servounterstützungskraft wird von der Kolbenstange 22 auf den Hebel 24 (siehe Fig. 1) und von dort auf die Hohlwelle 52 übertragen.

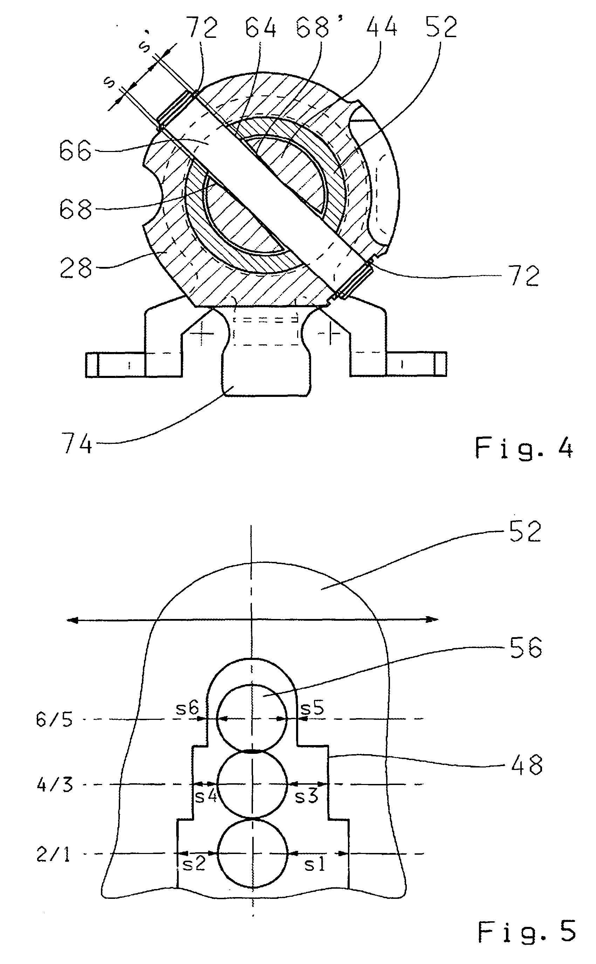

Durch eine Wegbegrenzung in der Ansteuerung der Servounterstützungseinrichtung 10 können unterschiedliche Servounterstützungskräfte erzeugt werden. Die Wegbegrenzung ist derart ausgebildet, dass zwischen der Schaltwelle 44 und der Hohlwelle 52 entsprechende Verdrehspiele vorherrschen, welche durch eine Nut 48 in der Hohlwelle 52 und die Stifte 56 realisiert werden. Durch eine entsprechende Ausgestaltung der Nut 48 in der Hohlwelle 52 (Fig. 5) können zwischen der Schaltwelle 44 und der Hohlwelle 52 unterschiedliche Verdrehspiele vorherrschen. Die Servounterstützungskraft wird solange erzeugt, bis das Verdrehspiele zwischen der Schaltwelle 44 und der Hohlwelle 52 aufgehoben ist. Dann wird die Handschaltkraft direkt auf die Hohlwelle 52 übertragen und die Steuerstange 20 macht relativ zur Kolbenstange 22 der Servounterstützungseinrichtung 10 keinen Weg mehr. Bei dieser Ausführungsform sind die Hohlwelle 52 und der Hebel 18 derart angeordnet, dass sie axial zueinander verschiebbar sind. Die Ausführungsform der Fig. 2 zeigt die Schaltvorrichtung in der Schaltgasse für die 1 und 2. Gangstufe. Die Nut 48 in der Hohlwelle 52 ist derart ausgebildet, dass die Steuerstange 20 in der 1. Gangstufe den Weg s1*, während sie in der 2. Gangstufe lediglich den kürzeren Weg s2* zurücklegen kann.

Die Fig. 3 zeigt die Schaltvorrichtung 40 in einer weiteren Ausführungsform. Im Unterschied zu der Ausführungsform der Fig. 2 weist diese Ausführungsform einen Stift 38 auf, welcher fest oder über Lager 62 in der Schaltwelle 44 angeordnet ist. Der Hebel 18 weist zwei durchgehende axiale Nuten 46 sowie eine Bohrung 42 auf. Der Stift 38 ist derart in den Nuten 46 angeordnet, dass eine axiale Verschiebung der Schaltwelle 44 entlang ihrer Achse ermöglicht ist und eine Verdrehung der Schaltwelle 44 um ihre Achse ein Verschwenken des Hebels 18 auslöst. Über die Bohrung 42 wird die Montage des Stifts 38 ermöglicht. Die Hohlwelle 52 und die Schaltwelle 44 sind derart angeordnet, dass sie axial zueinander verschiebbar sind, wobei vorzugsweise die Schaltwelle 44 axial verschiebbar und die Hohlwelle 52 axial nicht verschiebbar angeordnet ist. Die Wegbegrenzung in der Ansteuerung der Servounterstützungseinrichtung 10 ist derart ausgebildet, dass zwischen der Schaltwelle 44 und der Hohlwelle 52 entsprechende Verdrehspiele vorherrschen, welche durch die Nut 48 in der Hohlwelle 52 und den Stift 38 realisiert werden.

Die Fig. 4 zeigt einen Schnitt durch die Schaltwelle 44 im Bereich des Hebels 28, der mit Fortsätzen 74 in hier nicht gezeigte Schaltschienen 32 eingreift (siehe Fig. 1). Hebel 28. Hohlwelle 52 und Schaltwelle 44 werden durch wenigstens einen Stift 66 durchdrungen. Die Hohlwelle 52 weist in diesem Bereich zwei Langlöcher 64 auf. Die Breite der Langlöcher 64 in Umfangrichtung der Hohlwelle 52 entspricht nahezu dem Durchmesser des Stiftes 66. Der Stift 66 wird beispielsweise durch Sicherungsringe 72 in seiner Lage gehalten. Die Schaltwelle 44 weist in diesem Bereich eine Bohrung auf, beispielsweise eine Schwenkbohrung. Durch die Schwenkbohrung entstehen zwischen der Schaltwelle 44 und dem Stift 66 entsprechende Spiele s, s'. Durch diese Spiele s, s' entstehen zwischen der Schaltwelle 44 und der Hohlwelle 52 entsprechende Verdrehspiele 68, 68'. Die Spiele s, s' können derart ausgebildet sein, dass beidseitig das gleiche Verdrehspiel 68, 68' bzw. dass unterschiedliche Verdrehspiele 68, 68' zwischen der Schaltwelle 44 und der Hohlwelle 52 entstehen. Die Spiele s, s' lassen sich also ebenfalls für eine wegabhängige Begrenzung der Servounterstützungskraft nutzen.

Die Schwenkbohrung durch die Schaltwelle 44, in weicher sich der Stift 66 befindet, kann auch als Langloch ausgebildet sein, wodurch in axialer Richtung der Schaltwelle 44 unterschiedlich große Spiele s, s' realisierbar sind. Weiterhin kann anstelle der Schwenkbohrung eine Nut in der Schaltwelle 44 vorgesehen sein, um unterschiedlich große Spiele s, s' zwischen Schaltwelle 44 und Stift 66 darzustellen, wobei der Stift 66 hierbei geteilt ist. Durch eine entsprechende Ausbildung des Langlochs bzw. der Nut kann für jede Gasse bzw. jeden Gang eine entsprechende Servounterstützungskraft erzeugt werden, wobei die Wählbewegung hierbei nicht durch die Schaltwelle 44, sondern über ein hier nicht dargestelltes Element auf den Hebel 28 übertragen wird.

Die Fig. 5 zeigt die Nut 48 in der Hohlwelle 52. Hier ist der Stift 56 in der Nut 48 in drei verschiedenen Positionen angedeutet, er ist aber in der Nut 48 lediglich einmal vorhanden. Die in der Fig. 5 untere Position stellt die Stellung des Stiftes 56 in der Schaltgasse für die 1. und 2. Gangstufe in einem 6-Gang-Hauptgetriebe dar. Die mittlere Position stellt die Stellung des Stiftes 56 in der Schaltgasse für die 3. und 4. Gangstufe dar, während die obere Position die Stellung des Stiftes 56 in der Schaltgasse für die 5. und 6. Gangstufe darstellt. Durch die Nut 48 in der Hohlwelle 52 wird für jeden Gang ein anderes Verdrehspiel s1, s2, s3, s4, s5, s6 zwischen Nut 48 und Stift 56 bzw. Hohlwelle 52 und Schaltwelle 44 realisiert. Die Nut 48 ist dabei derart ausgebildet, dass die Verdrehspiele s1, s3, s5 der einen Seite der Nut 48 andere Maße aufweisen, als die Verdrehspiele s2, s4, s6 auf der gegenüberliegenden Seite der Nut 48 zur Abbildung unterschiedlicher Servounterstützungskräfte bei unterschiedlichen Schaltpositionen in der gleichen Schaltgasse des Getriebes. Hierbei sind die Verdrehspiele bei Schaltgassen mit geringeren Gangstufen größer ausgebildet als bei Schaltgassen mit höheren Gangstufen. Das Verdrehspiel s1 ist am größten ausgebildet und somit der 1. Gangstufe zugeordnet, während das Verdrehspiel s6 am kleinsten ausgebildet und somit der 6. Gangstufe zugeordnet ist. Je größer das Verdrehspiel s1, s2, s3, s4, s5, s6 zwischen der Nut 48 in der Hohlwelle 52 und dem die Hohlwelle 52 durchsetzenden Stift 56 ist, desto größer ist die Servounterstützungskraft. Wird beispielsweise für die 1. und 2. Gangstufe dieselbe Servounterstützungskraft gewünscht, dann ist die Nut 48 derart auszubilden, dass die Verdrehspiele s1, s2 zwischen Stift 56 und Hohlwelle 52 das gleiche Maß aufweisen. Gelangt der Stift 56 mit der Hohlwelle 52 in Kontakt, so wird die Handschaltkraft direkt auf die Hohlwelle 52 übertragen, wodurch sich die an einer hier nicht gezeigten Schaltschiene 32 (Fig. 1) wirkende Schaltkraft durch die Addition der Servounterstützungskraft und der Handschaltkraft ergibt.

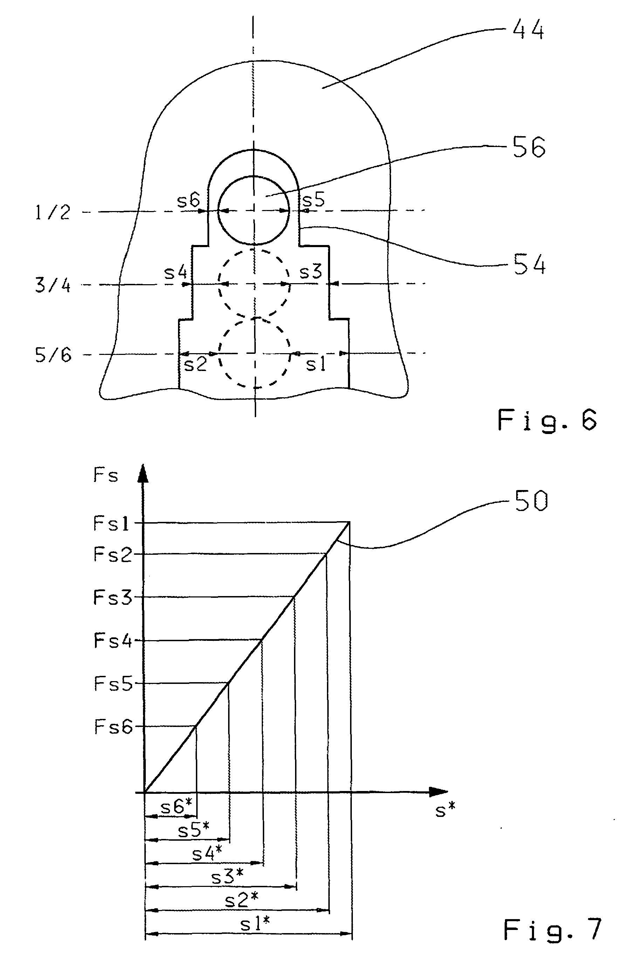

Die Fig. 6 zeigt eine weitere Ausführungsform der Erfindung. Im Unterschied zu der in der Fig. 5 beschriebenen Ausführungsform wird die Wegbegrenzung durch eine Nut 54 in der Schaltwelle 44 realisiert. Auch hier ist der Stift 56 in der Nut 54 in drei verschiedenen Positionen angedeutet, aber in der Nut 54 lediglich einmal vorhanden. Die in der Fig. 6 untere Position stellt die Stellung des Stiftes 56 in der Schaltgasse für die 5. und 6. Gangstufe in einem 6-Gang-Hauptgetriebe dar. Die mittlere Position stellt die Stellung des Stiftes 56 in der Schaltgasse für die 3. und 4. Gangstufe dar, während die obere Position die Stellung des Stiftes 56 in der Schaltgasse für die 1. und 2. Gangstufe darstellt. Hier sind die Verdrehspiele s1, s2, s3, s4, s5, s6 bei Schaltgassen mit geringeren Gangstufen kleiner ausgebildet als bei Schaltgassen mit höheren Gangstufen. Bei dieser Ausführungsform entsteht eine Servounterstützungskraft erst dann, wenn die Schaltwelle 44 mit dem Stift 56 in Kontakt tritt und somit über den Hebel 18 die Steuerstange 20 der Servounterstützungseinrichtung 10 betätigt. Je größer das Verdrehspiel s1, s2, s3, s4, s5, s6 zwischen der Nut 54 in der Schaltwelle 44 und dem in die Schaltwelle 44 eingreifenden bzw. die Schaltwelle 44 durchsetzenden Stift 56 ist, desto später wird die Verdrehung der Schaltwelle 44 auf den Hebel 18 übertragen, wodurch der Betätigungsweg der Steuerstange 20 der Servounterstützungseinrichtung 10 und somit die Servounterstützungskraft dementsprechend klein sind. Das Verdrehspiel s1 ist am größten ausgebildet und somit der 6. Gangstufe zugeordnet, während das Verdrehspiel s6 am kleinsten ausgebildet und somit der 1. Gangstufe zugeordnet ist. Dadurch wird für die kleineren Gänge eine größere Servounterstützungskraft zur Verfügung gestellt, als für größere Gänge.

Die Fig. 7 zeigt schematisch die wegabhängige Servounterstützungskraft Fs aufgetragen über den Betätigungsweg s* der Steuerstange 20 der Servounterstützungseinrichtung 10. Die konstruktiv vorgegebene Servokennlinie 50 ist linear, wobei die Steigung der Kennlinie 50 durch eine Nachgiebigkeit bzw. Elastizität in den Bauteilen vor bzw. in der Servounterstützungseinrichtung 10 oder aus deren Kombination entsteht. Die Kennlinie kann auch einen anderen, nicht linearen Verlauf aufweisen. Durch die Wegbegrenzung in der Ansteuerung der Servounterstützungseinrichtung 10 wird der Verdrehwinkel der Schaltwelle 44 unterschiedlich begrenzt, wodurch die Steuerstange 20 gangabhängig einen entsprechenden Weg s1*, s2*, s3*, s4*, s5*, s6* zurücklegen kann. Dadurch kann jedem Weg s1*, s2*, s3*, s4*, s5*, s6* unter Verwendung der Servokennlinie 50 eine bestimmte Servounterstützungskraft Fs1, Fs2, Fs3. Fs4, Fs5. Fs6 zugeordnet werden.

Die Begrenzung des Verdrehwinkels der Schaltwelle 44 durch die Verdrehspiele s1, s2, s3, s4, s5, s6 bewirkt somit die Begrenzung des Betätigungswegs s1*, s2*, s3*, s4*, s5*, s6* der Steuerstange 20 der Servounterstützungseinrichtung 10. Dadurch kann die Servounterstützungskraft Fs1, Fs2, Fs3. Fs4, Fs5, Fs6 weg- bzw. gangabhängig begrenzt werden, so dass die Servounterstützungskraft Fs1, Fs2, Fs3, Fs4, Fs5, Fs6 bestimmte Werte nicht überschreitet.

Durch die Erfindung kann ohne zusätzlichen Bauraum und ohne verschiedene Nachgiebigkeiten jeder Gasse bzw. jedem Gang eine entsprechende Servounterstützungskraft zugeordnet werden und für jede Synchronisierung im Getriebe kann eine individuelle Begrenzung der maximal zulässigen Servounterstützungskraft erzielt werden. Jeder Gasse bzw. jedem Gang kann ein genau definierter Steuerstangenweg, hier über ein genau definiertes Verdrehspiel, zugeordnet werden, wodurch die Servounterstützung bis hin zur maximalen Servounterstützungskraft angepasst werden kann.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 38: Stift
- 40: Schaltvorrichtung
- 42: Bohrung
- 44: Schaltwelle
- 46: Nut
- 48: Nut
- 50: Kennlinie
- 52: Hohlwelle
- 54: Nut
- 56: Stift
- 58: Nadel büchse
- 60: Rolle
- 62: Lager
- 64: Langloch
- 66: Stift
- 68: Verdrehspiel
- 68': Verdrehspiel
- 70: Tasche
- 72: Sicherungsring
- 74: Fortsatz

- s: Spiel
- s': Spiel
- s1 - s6: Verdrehspiele
- s*: Betätigungsweg der Steuerstange
- Fs: Servounterstützungskraft

## Patentansprüche

1. Schaltvorrichtung (11, 40) mit Servounterstützungseinrichtung (10) für ein Getriebe (30) eines Fahrzeuges, welche Mittel zum Wählen und zum Schalten einer Gangstufe des Getriebes (30), mindestens eine Nachgiebigkeit vor und/oder in der Servounterstützungseinrichtung (10), eine Hohlwelle (52) und ein Element (20) umfasst, auf das eine zu unterstützende Handschaltkraft einwirkt, wobei in der Ansteuerung der Servounterstützungseinrichtung (10) eine Wegbegrenzung vorgesehen ist, **dadurch gekennzeichnet, dass** die Wegbegrenzung durch unterschiedliche Verdrehspiele (s1, s2, s3, s4, s5, s6) zwischen einer Nut (48) in der Hohlwelle (52) und einem die Nut (48) durchdringenden Stift (56, 38) in axialer Richtung der Hohlwelle (52) realisiert ist.

2. Schaltvorrichtung (11, 40) mit Servounterstützungseinrichtung (10) nach Anspruch 1, **dadurch gekennzeichnet, dass** die Verdrehspiele (s1, s2, s3, s4, s5, s6) bei geringeren Gangstufen größer ausgebildet sind als bei höheren Gangstufen, wobei das Verdrehspiel (s1) für die kleinste Gangstufe am größten und das Verdrehspiel (s6) für die größe Gangstufe am kleinsten ausgebildet ist.

3. Schaltvorrichtung (11, 40) mit Servounterstützungseinrichtung (10) für ein Getriebe (30) eines Fahrzeuges, umfassend Mittel zum Wählen und zum Schalten einer Gangstufe des Getriebes (30), mindestens eine Nachgiebigkeit vor und/oder in der Servounterstützungseinrichtung (10), eine Schaltwelle (44), welche eine Nut (54) aufweist, in die ein Stift (56) eingreift und ein Element (20), auf das eine zu unterstützende Handschaltkraft einwirkt, wobei in der Ansteuerung der Servounterstützungseinrichtung (10) eine Wegbegrenzung vorgesehen ist, welche durch unterschiedliche Verdrehspiele (s1, s2, s3, s4, s5, s6) zwischen der Nut (54) in der Schaltwelle (44) und dem in die Nut (54) eingreifenden Stift (56) in axialer Richtung der Schaltwelle (44) realisiert ist, **dadurch gekennzeichnet, dass** die Verdrehspiele (s1, s2, s3, s4, s5, s6) bei geringeren Gangstufen kleiner ausgebildet sind als bei höheren Gangstufen, und das Verdrehspiel (s1) für die größe Gangstufe am größten und das Verdrehspiel (s6) für die kleinste Gangstufe am kleinsten ausgebildet ist.

4. Schaltvorrichtung (11, 40) mit Servounterstützungseinrichtung (10) nach einem der Ansprüche 1 bis 3, **dadurch gekennzeichnet, dass** die Verdrehspiele (s1, s3, s5) der einen Seite der Nut (48, 54) andere Maße aufweisen, als die Verdrehspiele (s2, s4, s6) auf der gegenüberliegenden Seite der Nut (48, 54) zur Abbildung unterschiedlicher Servounterstützungskräfte bei unterschiedlichen Schaltpositionen in der gleichen Schaltgasse des Getriebes (30).

5. Schaltvorrichtung (11, 40) mit Servounterstützungseinrichtung (10) für ein Getriebe (30) eines Fahrzeuges, welche Mittel zum Wählen und zum Schalten einer Gangstufe des Getriebes (30), mindestens eine Nachgiebigkeit vor und/oder in der Servounterstützungseinrichtung (10), eine Schaltwelle (44), eine Hohlwelle (54) und ein Element (20) umfasst, auf das eine zu unterstützende Handschaltkraft einwirkt, wobei in der Ansteuerung der Servounterstützungseinrichtung (10) eine Wegbegrenzung vorgesehen ist, welche durch Spiele (s, s') zwischen einer Schwenkbohrung in der Schaltwelle (44) und einem die Schwenkbohrung durchdringenden Stift (66) realisiert ist, **dadurch gekennzeichnet, dass** die Spiele (s, s') derart ausgebildet sind, dass unterschiedliche Verdrehspiele zwischen der Schaltwelle (44) und der Hohlwelle (54) entstehen.

6. Schaltvorrichtung (11, 40) mit Servounterstützungseinrichtung (10) nach Anspruch 5, **dadurch gekennzeichnet, dass** die Schwenkbohrung in der Schaltwelle (44) als Langloch ausgebildet ist, derart, dass in axialer Richtung der Schaltwelle (44) unterschiedlich große Spiele (s, s') vorherrschen.

7. Schaltvorrichtung (11, 40) mit Servounterstützungseinrichtung (10) nach einem der Ansprüche 1 bis 6, **dadurch gekennzeichnet, dass** das Element (20) als Steuerstange der Servounterstützungseinrichtung (10) ausgebildet ist.

8. Schaltvorrichtung (11, 40) mit Servounterstützungseinrichtung (10) nach einem der Ansprüche 1 bis 7, **dadurch gekennzeichnet, dass** die Servounterstützungseinrichtung (10) eine Kolbenstange (22) umfasst, welche mit Mitteln zum Schalten eines Zahnräderwechselgetriebes zusammenwirkt.

## Claims

1. Shifting device (11, 40) with servo assistance unit (10) for a transmission (30) of a vehicle, which shifting device comprises means for selecting and for shifting a gear stage of the transmission (30), at least one flexibility upstream of and/or in the servo assistance unit (10), a hollow shaft (52) and an element (20) on which a manual shift force to be assisted acts, with a travel delimitation being provided in the activation of the servo assistance unit (10), **characterized in that** the travel delimitation is realized in the axial direction of the hollow shaft (52) by means of different rotational plays (s1, s2, s3, s4, s5, s6) between a groove (48) in the hollow shaft (52) and a pin (56, 38) which extends through the groove (48).

2. Shifting device (11, 40) with servo assistance unit (10) according to Claim 1, **characterized in that** the rotational plays (s1, s2, s3, s4, s5, s6) are greater for relatively low gear stages than for relatively high gear stages, with the rotational play (s1) for the lowest gear stage being the greatest and the rotational play (s6) for the highest gear stage being the smallest.

3. Shifting device (11, 40) with servo assistance unit (10) for a transmission (30) of a vehicle, comprising means for selecting and for shifting a gear stage of the transmission (30), at least one flexibility upstream of and/or in the servo assistance unit (10), a shifting shaft (44) which has a groove (54) into which a pin (56) engages, and an element (20) on which a manual shift force to be assisted acts, with a travel delimitation being provided in the activation of the servo assistance unit (10), which travel delimitation is realized by means of different rotational plays (s1, s2, s3, s4, s5, s6) in the axial direction of the shifting shaft (44) between the groove (54) in the shifting shaft (44) and the pin (56) which engages into the groove (54), **characterized in that** the rotational plays (s1, s2, s3, s4, s5, s6) are smaller for relatively low gear stages than for relatively high gear stages, with the rotational play (s1) for the highest gear stage being the greatest and the rotational play (s6) for the lowest gear stage being the smallest.

4. Shifting device (11, 40) with servo assistance unit (10) according to one of Claims 1 to 3, **characterized in that** the rotational plays (s1, s3, s5) on one side of the groove (48, 54) have different dimensions than the rotational plays (s2, s4, s6) on the opposite side of the groove (48, 54) in order to realize different servo assistance forces in different shift positions in the same shift lane of the transmission (30).

5. Shifting device (11, 40) with servo assistance unit (10) for a transmission (30) of a vehicle, which shifting device has means for selecting and for shifting a gear stage of the transmission (30), at least one flexibility upstream of and/or in the servo assistance unit (10), a shifting shaft (44), a hollow shaft (54) and an element (20) on which a manual shift force to be assisted acts, with a travel delimitation being provided in the activation of the servo assistance unit (10), which travel delimitation is realized by means of plays (s, s') between a pivot bore in the shifting shaft (44) and a pin (66) which extends through the pivot bore, **characterized in that** the plays (s, s') are designed such that different rotational plays between the shifting shaft (44) and the hollow shaft (54) are generated.

6. Shifting device (11, 40) with servo assistance unit (10) according to Claim 5, **characterized in that** the pivot bore in the shifting shaft (44) is designed as a slot, in such a way that plays (s, s') prevail which differ in magnitude in the axial direction of the shifting shaft (44).

7. Shifting device (11, 40) with servo assistance unit (10) according to one of Claims 1 to 6, **characterized in that** the element (20) is designed as a control rod of the servo assistance unit (10).

8. Shifting device (11, 40) with servo assistance unit (10) according to one of Claims 1 to 7, **characterized in that** the servo assistance unit (10) comprises a piston rod (22) which interacts with means for shifting a variable-speed gearwheel transmission.

## Revendications

1. Dispositif de changement de vitesse (11, 40) comprenant un système d'assistance par asservissement (10) pour une boîte de vitesses (30) d'un véhicule, qui comprend des moyens pour sélectionner et commuter un rapport de vitesse de la boîte de vitesses (30), au moins une flexibilité avant et/ou dans le système d'assistance par asservissement (10), un arbre creux (52) et un élément (20) sur lequel agit une force de sélection manuelle à assister, une limitation de course étant prévue dans la commande du système d'assistance par asservissement (10), **caractérisé en ce que** la limitation de course est réalisée dans la direction axiale de l'arbre creux (52) par différents jeux de rotation (s1, s2, s3, s4, s5, s6) entre une rainure (48) dans l'arbre creux (52) et une broche (56, 38) traversant la rainure (48).

2. Dispositif de changement de vitesse (11, 40) comprenant un système d'assistance par asservissement (10) selon la revendication 1, **caractérisé en ce que** les jeux de rotation (s1, s2, s3, s4, s5, s6) sont plus grands pour des rapports de vitesse plus bas que pour des rapports de vitesse plus hauts, le jeu de rotation (s1) pour le rapport de vitesse le plus petit étant le plus grand et le jeu de rotation (s6) pour le rapport de vitesse le plus grand étant le plus petit.

3. Dispositif de changement de vitesse (11, 40) comprenant un système d'assistance par asservissement (10) pour une boîte de vitesses (30) d'un véhicule, qui comprend des moyens pour sélectionner et commuter un rapport de vitesse de la boîte de vitesses (30), au moins une flexibilité avant et/ou dans le système d'assistance par asservissement (10), un arbre de changement de vitesse (44), qui présente une rainure (54) dans laquelle s'engage une broche (56) et un élément (20) sur lequel agit une force de sélection manuelle à assister, une limitation de course étant prévue dans la commande du système d'assistance par asservissement (10), laquelle est réalisée dans la direction axiale de l'arbre de changement de vitesse (44) par différents jeux de rotation (s1, s2, s3, s4, s5, s6) entre la rainure (54) dans l'arbre de changement de vitesse (44) et la broche (56) s'engageant dans la rainure (54), **caractérisé en ce que** les jeux de rotation (s1, s2, s3, s4, s5, s6) sont plus petits pour des rapports de vitesse plus bas que pour des rapports de vitesse plus hauts, et le jeu de rotation (s1) pour le rapport de vitesse le plus grand étant le plus grand et le jeu de rotation (s6) pour le rapport de vitesse le plus petit étant le plus petit.

4. Dispositif de changement de vitesse (11, 40) comprenant un système d'assistance par asservissement (10) selon l'une quelconque des revendications 1 à 3, **caractérisé en ce que** les jeux de rotation (s1, s3, s5) d'un côté de la rainure (48, 54) présentent d'autres dimensions que les jeux de rotation (s2, s4, s6) du côté opposé de la rainure (48, 54) afin de réaliser des forces d'assistance par asservissement différentes pour différentes positions de changement de vitesse dans la même voie de changement de vitesse de la boîte de vitesses (30).

5. Dispositif de changement de vitesse (11, 40) comprenant un système d'assistance par asservissement (10) pour une boîte de vitesses (30) d'un véhicule, qui comprend des moyens pour sélectionner et commuter un rapport de vitesse de la boîte de vitesses (30), au moins une flexibilité avant et/ou dans le système d'assistance par asservissement (10), un arbre de changement de vitesse (44), un arbre creux (54) et un élément (20) sur lequel agit une force de sélection manuelle à assister, une limitation de course étant prévue dans la commande du système d'assistance par asservissement (10), laquelle est réalisée par des jeux (s, s') entre un alésage pivotant dans l'arbre de changement de vitesse (44) et une broche (66) traversant l'alésage pivotant, **caractérisé en ce que** les jeux (s, s') sont réalisés de telle sorte que l'on obtienne différents jeux de rotation entre l'arbre de changement de vitesse (44) et l'arbre creux (54).

6. Dispositif de changement de vitesse (11, 40) comprenant un système d'assistance par asservissement (10) selon la revendication 5, **caractérisé en ce que** l'alésage pivotant dans l'arbre de changement de vitesse (44) est réalisé sous forme de trou oblong, de telle sorte que différents grands jeux (s, s') soient présents dans la direction axiale de l'arbre de changement de vitesse (44).

7. Dispositif de changement de vitesse (11, 40) comprenant un système d'assistance par asservissement (10) selon l'une quelconque des revendications 1 à 6, **caractérisé en ce que** l'élément (20) est réalisé sous forme de tige de commande du système d'assistance par asservissement (10).

8. Dispositif de changement de vitesse (11, 40) comprenant un système d'assistance par asservissement (10) selon l'une quelconque des revendications 1 à 7, **caractérisé en ce que** le système d'assistance par asservissement (10) comprend une tige de piston (22) qui coopère avec des moyens pour commuter une boîte de vitesses à engrenages.
